# EUROPEAN PATENT SPECIFICATION

(11) **EP 1 021 944 B1**
(45) Date of publication and mention of the grant of the patent: **24.09.2003**
(21) Application number: 99830019.8
(22) Date of filing: 21.01.1999
(51) Int. Cl.: A01D 41/14

(54) **Foldable head for combine**
Klappbarer Mähtisch für Mähdrescher
Tablier de coupe pour moissonneuse-batteuse

(43) Date of publication of application: 26.07.2000
(73) Proprietor: CAPELLO F.LLI RENATO E FRANCESCO S.N.C., I-12020 Fraz. Madonna dell'Olmo (Cuneo) (IT)
(72) Inventor: Capello, Alberto, 12022 Busca (Cuneo) (IT); Capello, Elio, 12100 Cuneo (IT)
(74) Representative: Robba, Pierpaolo

(56) References cited:
- EP-A- 0 755 621
- EP-A- 0 789 990
- WO-A-97/24919
- DE-A- 2 026 190
- DE-A- 2 124 341
- FR-A- 1 577 198
- FR-A- 2 025 379
- FR-A- 2 263 675
- GB-A- 1 130 239

## Description

The present invention relates to an improved foldable base for a cereal head assembly to be mounted on a combine-harvester machine (harvester thresher), the improvement substantially implying a radical simplification in the blade assembly.

The present applicant owns a previous European patent application directed to a cereal head assembly to be mounted on a combine-harvester machine.

This former application was filed on 31.01.97 with No. 97101529.2, claiming priority of application No. TO 96 A 000102 filed in Italy on 16.02 96, and was published with No. 0.789.990 on 20.08.97,

The present invention relates to an improvement that brings about a radical simplification of the blade assembly disclosed in the above mentioned application so that such previous application presently appears to be the most pertinent "prior art" to the present invention.

In respect of other characteristics of the head assembly, such as the auger, the folding back of the machine, the pickup reel, etc. reference is made to what as been suggested, described and claimed in the above mentioned patent application.

In the machine disclosed in the above mentioned application, the cutting blade is formed by aligned serrated portions actuated by a pair of rods parallel to each other and to the blade, and located inside a closed compartment. Although such solution offered a satisfactory driving mechanism, it had the drawbacks of a relative liability to breakage of the drive members and of requiring a periodic maintenance thereof since they are subjected to severe stresses and wear.

It is an object of the present invention to overcome the above mentioned drawbacks by providing a more practical and direct approach in which the blade portions are connected to each other so as to operate like an integral single rigid blade, and the reciprocating motion is directly imparted to the cutting blade without employing transmission rods, idler wheels and similar devices used in the previous arrangement.

It is known from DE 20 26 190 that the cutting blade portions shall have properly shaped headers, provided with grooves or ribs at the junction of each portion thereof, to be coupled to each other.

Furthermore, in order to securely couple said cutting blade portions, a clamping means shall be provided, comprising a U-shaped element connected by a pin to one of the two adjoining portions and, when clamping means is required, kept in position by a locking bolt passing through the other one of the two adjoining portions.

It is to be noted that given the head assembly to which the novel solution is to be applied, the cutting blade assembly is formed by three portions and the reciprocating motion occurs along their length.

The main characteristics of the present invention will become evident from the attached claims.

The invention will now be disclosed in details with particular reference to the attached drawings, only supplied as illustrating a non limitative embodiment thereof, in which:
Fig. 1 is a schematic perspective view of a reciprocating driving system of a serrated blade according to an embodiment of the prior art;
Fig. 2 is a fragmentary perspective view illustrating how a portion of a serrated blade is inserted and moved between pairs of teeth forming a fixed cooperating blade, still according to the prior art;
Fig. 3 is a schematic perspective view illustrating the reciprocating system according to the present invention;
Fig. 4 is a fragmentary perspective view showing the insertion of a serrated blade portion into the spaces between the teeth of the fixed blade according to the present invention;

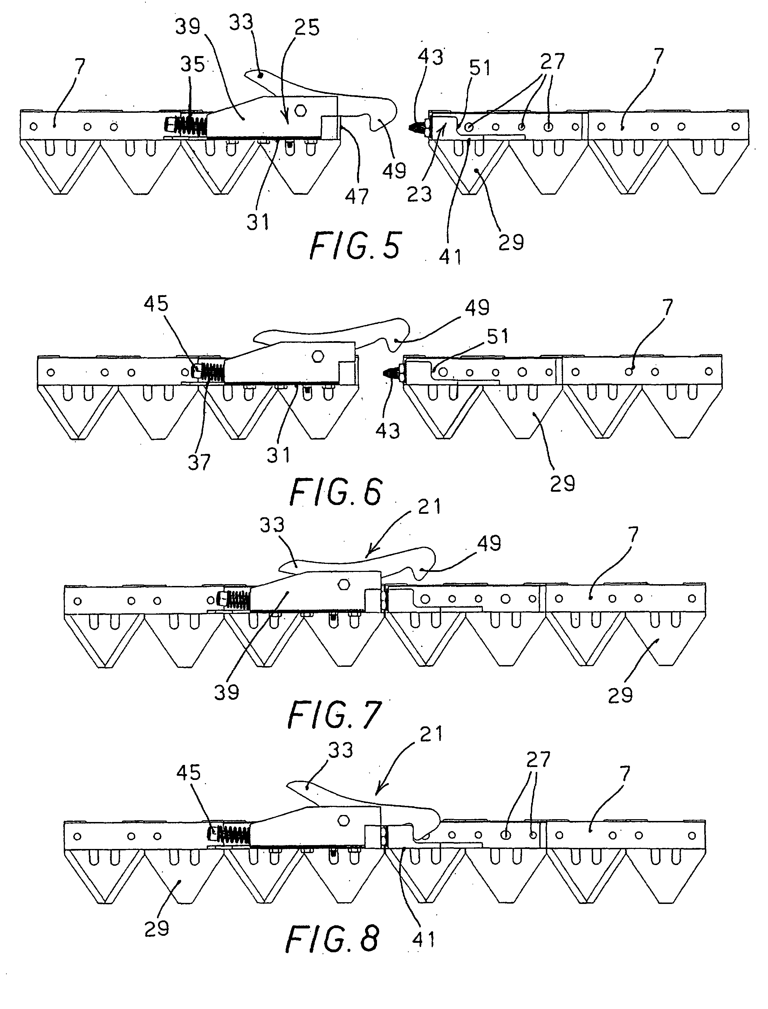

Figures 5, 6, 7 and 8 illustrate the joining of two adjacent blade sections by means of male/female clutches;

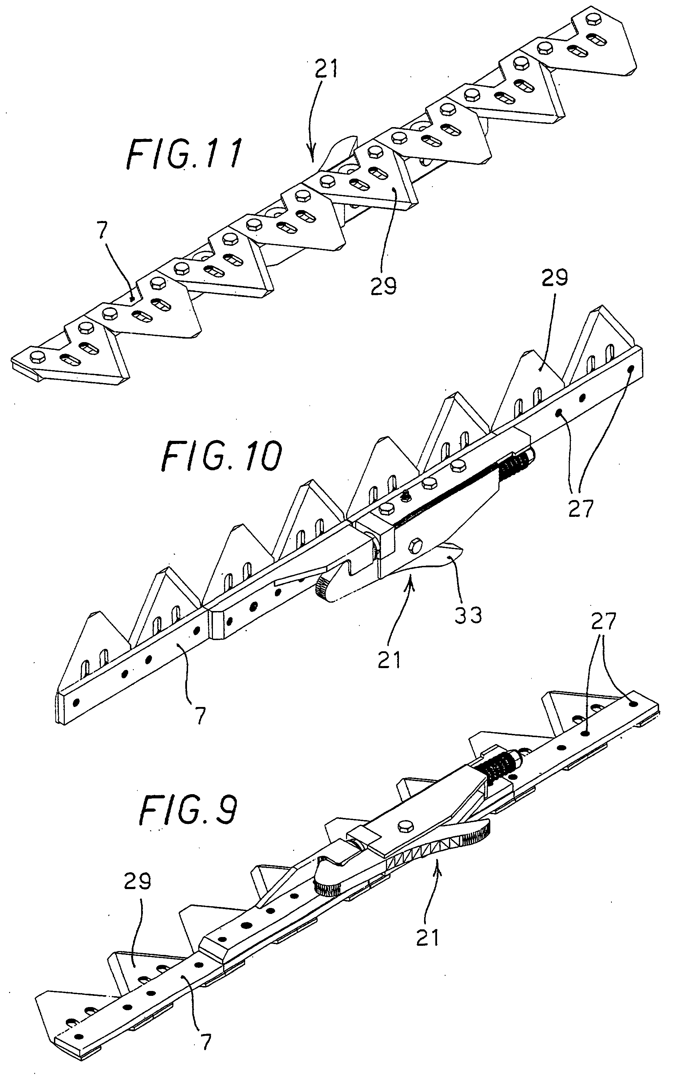

Figures 9, 10 and 11 are a top, a side and a bottom perspective view, respectively, of two blade sections rigidly joined to each other in accordance with the present invention;

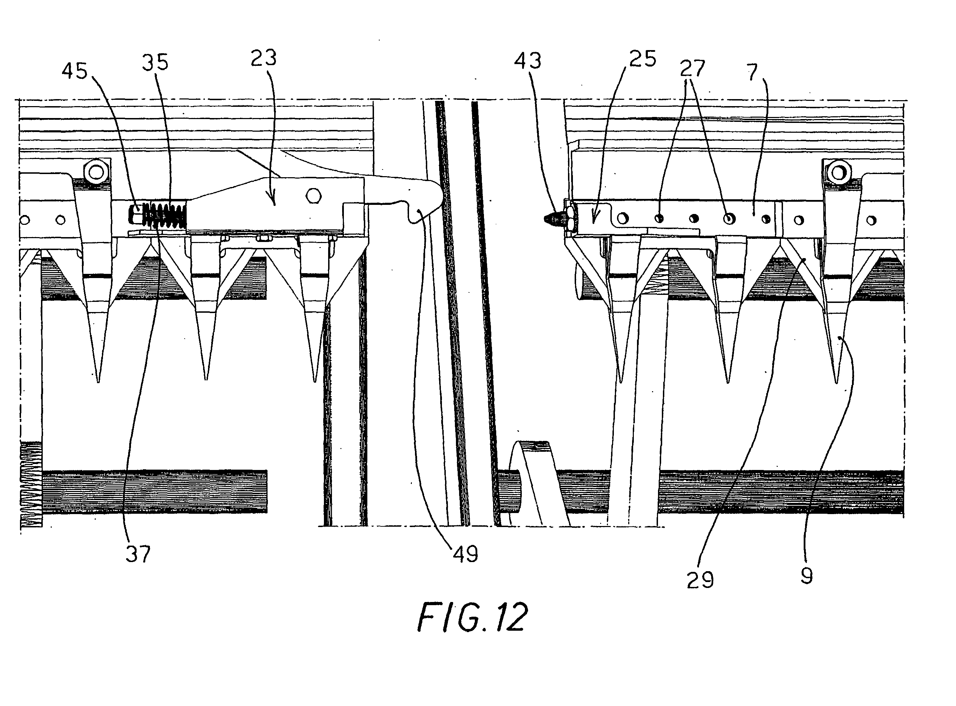

Fig. 12 is a front perspective view illustrating two parts of the head assembly base that are to be joined to each other in accordance with the present invention;
Fig. 13 is a fragmentary perspective view showing with more details how a reciprocating motion is imparted to the cutting blade of the machine head assembly;

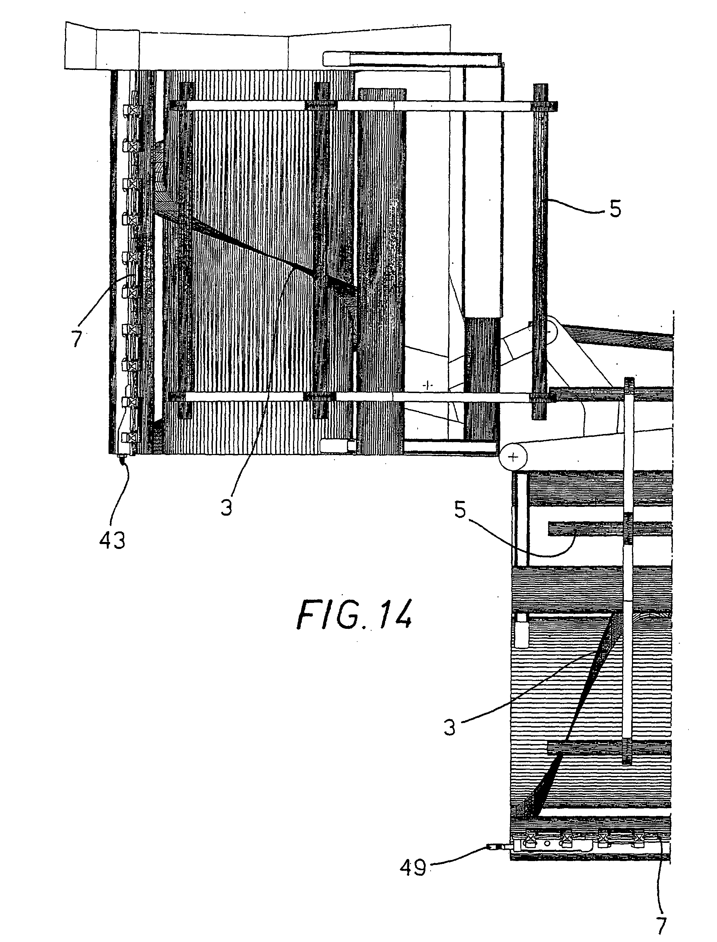

Fig. 14 is a front view illustrating a head assembly with a side portion thereof that has been rotated by 90Ø; and

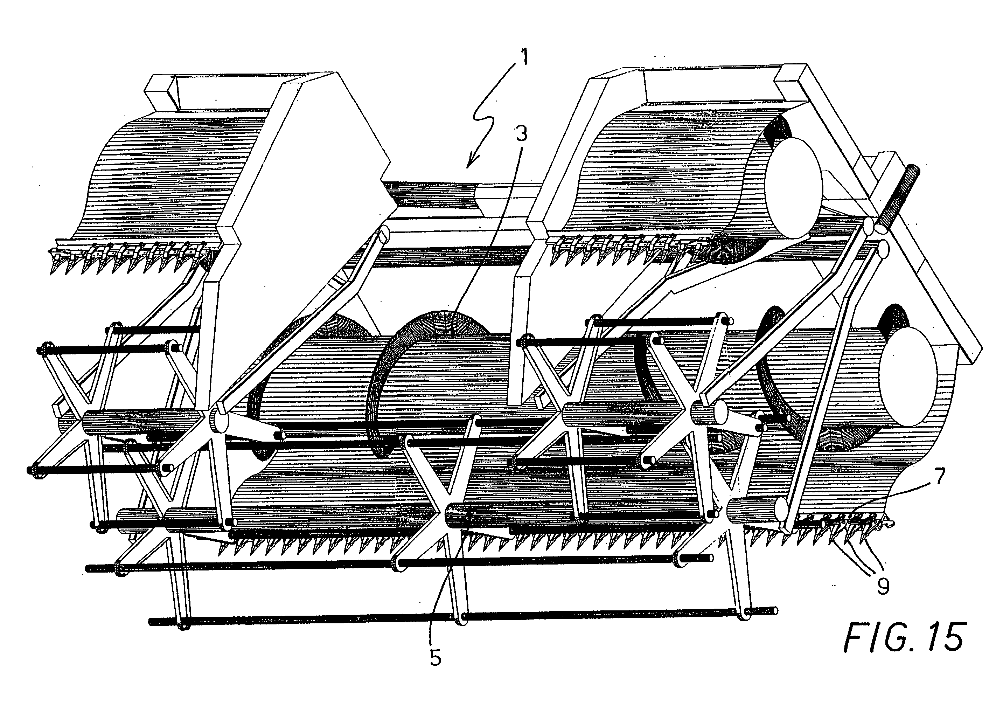

Fig. 15 is a complete front perspective view of the cereal head assembly with the side portions lifted and folded.

Referring to the Figures, a head assembly for cereals e.g. the one disclosed in the above mentioned patent application, to which the novel improvement applies is a conventional head assembly 1 for cereals that can be mounted to a combine-harvester machine, and comprises an auger 3, a pickup reel 5 that can be raised with respect to the auger 3, and a cutting blade assembly 7 comprising sections of serrated blade inserted and movable between pairs of teeth 9.

As already noted, in said head assembly 1 a reciprocating motion is transmitted to the auger 3, to the pickup reel 5 and to the blade 7 at one side only of the machine.

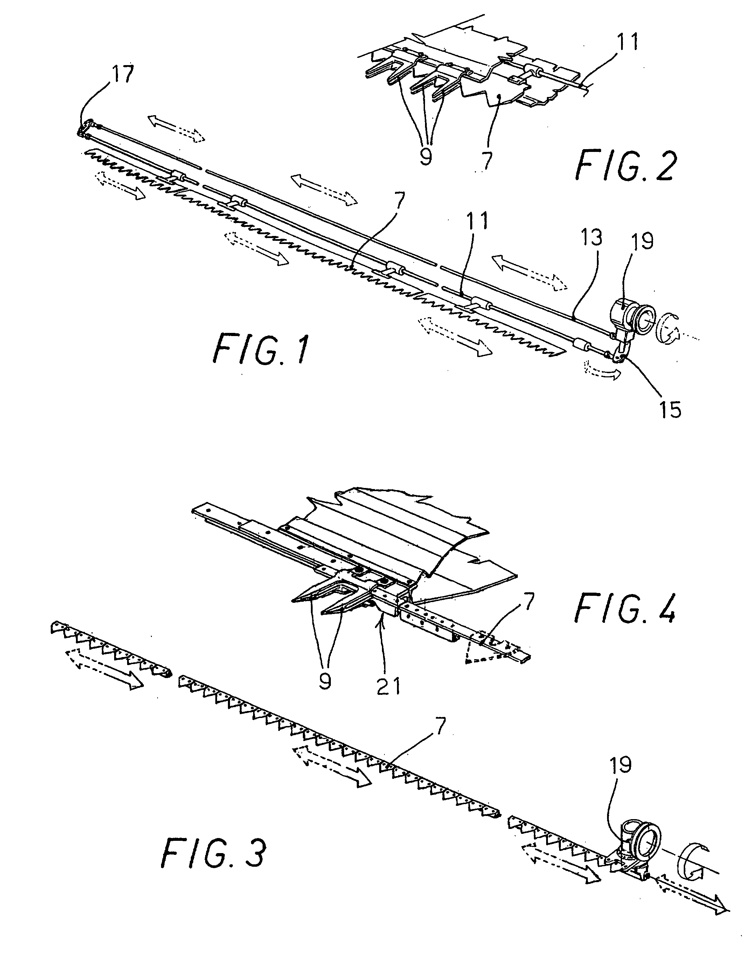

According to the previous solution disclosed in the above mentioned patent application (see Figures 1 and 2), the motion was imparted to the aligned serrated blade portions through two series of aligned rods 11 and 13, with each series being formed of three parts, parallel to each other and to the portions of the blade 7. Each actuating rod of the first rod series 11 is secured to a section of the blade 7, and the rods of the second series 13 are coupled to the first series 11 either by means of interposed fixed gear wheels (not shown) meshing with toothed blocks on each portion of said rods 11 and 13, or thanks to two pivoted elements 15, 17 (one of which is directly connected with the motor 19) imparting the reciprocating motion to said elements 15, 17.

In accordance with the solution of the present invention, the three sections forming the cutting blade assembly 7 are joined to each other - when aligned - by two fastening devices or clutches 21, such fastening devices being adapted to firmly connect together the three sections so that the connected blade portions behave like an integral single rigid blade 7.

Each fastening device 21 comprises two separate parts: a male portion 23 and a female portion 25 that are fitted to the ends of two adjacent blade sections to be rigidly joined together. Both the male and female portions are secured to the respective section of blade thanks to holes 27 provided for assembling the single cutting member or knives 29 to a flat bar to form the blade section.

The female portion 25 comprises a base 31, a pivoted lever member 33 terminating at one end with a beak 49, a guide rod 35 with a helical return spring 37 and a sheet metal protection case 39.

The male portion 23 comprises a base 41 adapted to be secured to the flat bar, a dog or catch protruding from said base and a centering pin 43.

During the engagement, the rod 35 maintains the lever 33 in a rest position urged by the spring 37, the spring being adjustable through a nut 45.

When the lever 33 is bumped by the male portion 23, the lever is forced to rotate counterclockwise allowing the approach of the parts, and the subsequent engagement thereof when the beak 49 engages the recess 51.

The perfect alignment of the two portions 23 and 25 is ensured by a centering pin 43 of the male portion 23 that enters a recess 47 provided in the female portion 25.

To this aim the beak-shaped point of the lever 33 is received in the recess 51 of the male portion 23 ensuring a complete and stiff joining of the two blade sections.

In order to release the fastening device, a force normal to the longitudinal direction of the blade 7 is applied to the lever 33 so as to lift said lever 33 and disengage the beak 49 of said lever 33 from the recess 51 in which it is received.

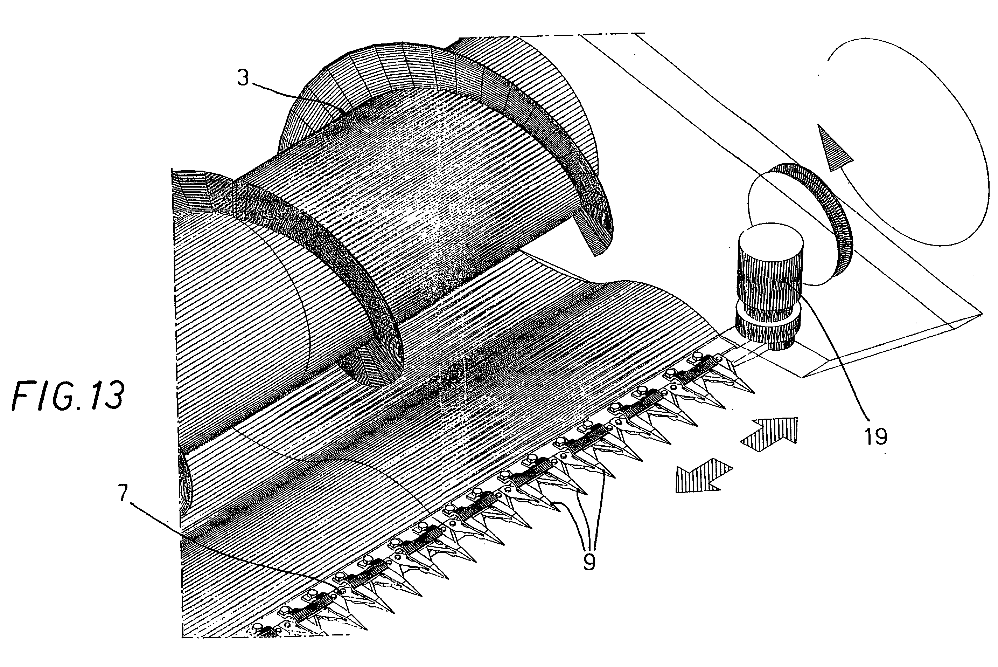

According to the invention the reciprocating motion is imparted to a side portion of the cutting blade 7 by a motor 19 disposed on the side of said blade 7 and acting on one side only thereof through a gear arrangement as shown in Figures 3 and 13.

## Claims

1. An improved foldable head assembly (1) to be mounted on a combine-harvester machine for cereals, said head assembly (1) comprising an auger (3), a pickup reel (5) that can be raised with respect to said auger (3), and a cutting blade assembly (7) comprising blade sections inserted and movable between pairs of teeth (9), wherein the motion to said auger (3), pickup reel (5) and cutting blade assembly (7) is transmitted at one side only of the machine; each of said auger (3), pickup reel (5) and cutting blade assembly (7) is formed by three sections, namely a central section and two foldable side sections; the adjacent ends of the three blade sections forming said cutting blade assembly (7) are rigidly joined together when aligned by means of fastening devices (21) connecting said three blade sections into a single rigid cutting blade assembly (7);
**characterised in that** each of said fastening devices (21) comprises a pivotable lever member (33), said lever member (33) being able to assume a first position of engagement to rigidly join together a corresponding side section with said central section and a second position of disengagement to allow the corresponding side section to be folded.

2. An improved head assembly according to claim 1, **characterised in that** said pivotable lever member (33) terminates at one end with a beak (49).

3. An improved head assembly according to claim 2, **characterised in that** said beak (49) is suitable for engagement in a corresponding recess (51).

4. An improved head assembly according to claims 1 or 2 or 3, **characterised in that** each of said fastening devices (21) further comprises a centering pin (43) to ensure the proper alignment of said corresponding side section with said central section.

5. An improved head assembly according to the preceding claims, **characterised in that** each of said fastening devices (21) is formed by two separate portions: a female portion (25) and a male portion (23), each of which is fitted to one end of the blade sections to be rigidly joined together, said female portion (25) comprising said pivotable lever member (33) and said male portion (23) comprising said centering pin (43).

6. An improved head assembly according to claim 5, **characterised in that** said female portion (25) of each fastening device (21) further comprises a base (31), a guide rod (35) with a return spring (37) and a protection case (39).

7. An improved head assembly according to claim 6, **characterised in that** said return spring (37) is a helical spring.

8. An improved head assembly according to claim 6, **characterised in that** said protection case (39) is a sheet of metal.

9. An improved head assembly according to claim 5, **characterised in that** said male portion (23) of each fastening device (21) further comprises a base (41) adapted to be secured to the flat bar and a dog or catch protruding from said base.

10. An improved head assembly according to the preceding claims, **characterised in that**, when said male portion (23) bumps said pivotable lever member (33), this latter is forced to rotate allowing the approach of said adjacent ends of the three blade sections forming said cutting blade assembly (7), and the subsequent engagement thereof when said beak (49) engages said corresponding recess (51) in said male portion (23).

11. An improved head assembly according to the preceding claims, **characterised in that** the proper alignment of the two portions (23, 25) is ensured by said centering pin (43) on said male portion (23) that enters a corresponding recess (47) provided in the female portion (25).

12. An improved head assembly according to the preceding claims, **characterised in that** during the engagement, said guide rod (35) maintains said pivotable lever member (33) in a rest position urged by said return spring (37), said return spring being adjustable through a nut (45).

13. An improved head assembly according to the preceding claims, **characterised in that** said fastening device (21) is released by applying to said pivotable lever member (33) a force normal to the longitudinal direction of the blade (7) so as to lift said lever (33) and disengage said beak (49) of said lever (33) from said recess (51) in which it is received.

14. An improved head assembly according to claim 5, **characterised in that** both said male and female portions (23, 25) are secured to the respective blade section (7) through holes (27) provided on a bar for assembling the single cutting members (29) thereto.

## Patentansprüche

1. An einem Getreide-Mähdrescher anzubringende verbesserte klappbare Tischanordnung (1) mit einer Förderschnecke (3), einem Aufnahmerechen (5), der bezüglich der Förderschnecke (3) angehoben werden kann, und einer Schneidblattanordnung (7), die Blattabschnitte aufweist, die zwischen Zahnpaaren (9) eingesetzt und bewegbar sind, wobei die Bewegung zur Förderschnecke (3), zum Aufnahmerechen (5) und zur Schneidblattanordnung (7) auf nur einer Seite des Mähdreschers übertragen wird; Förderschnecke (3), Aufnahmerechen (5) und Schneidblattanordnung (7) jeweils aus drei Abschnitten, nämlich einem zentralen Abschnitt und zwei klappbaren Seitenabschnitten, bestehen; die benachbarten Enden der drei Blattabschnitte, die die Schneidblattanordnung (7) bilden, wenn ausgerichtet, mittels Befestigungsvorrichtungen (21) starr miteinander verbunden sind, wobei die drei Blattabschnitte zu einer einzigen starren Schneidblattanordnung (7) zusammengefügt sind;
**dadurch gekennzeichnet, daß** jede Befestigungsvorrichtung (21) ein drehbares Hebelelement (33) aufweist, wobei das Hebelelement (33) eine erste Eingriffsposition, um einen entsprechenden Seitenabschnitt mit dem zentralen Abschnitt starr zu verbinden, und eine zweite Ausrückposition einnehmen kann, um ein Zusammenklappen des entsprechenden Seitenabschnitts zu erlauben.

2. Verbesserte Tischanordnung nach Anspruch 1, **dadurch gekennzeichnet, daß** das drehbare Hebelelement (33) an einem Ende in einer Greiferspitze (49) endet.

3. Verbesserte Tischanordnung nach Anspruch 2, **dadurch gekennzeichnet, daß** die Greiferspitze (49) zum Eingriff in eine entsprechende Aussparung (51) geeignet ist.

4. Verbesserte Tischanordnung nach Anspruch 1 oder 2 oder 3, **dadurch gekennzeichnet, daß** jede Befestigungsvorrichtung (21) ferner einen Zentrierstift (43) aufweist, um eine genaue Ausrichtung des entsprechenden Seitenabschnitts mit dem zentralen Abschnitt sicherzustellen.

5. Verbesserte Tischanordnung nach den vorstehenden Ansprüchen, **dadurch gekennzeichnet, daß** jede Befestigungsvorrichtung (21) aus zwei getrennten Teilen besteht: einem weiblichen Teil (25) und einem männlichen Teil (23), die jeweils an einem Ende der starr miteinander zu verbindenden Blattabschnitte angebracht sind, wobei der weibliche Teil (25) das drehbare Hebelelement (33) aufweist und der männliche Teil (23) den Zentrierstift (43) aufweist.

6. Verbesserte Tischanordnung nach Anspruch 5, **dadurch gekennzeichnet, daß** der weibliche Teil (25) jeder Befestigungsvorrichtung (21) ferner eine Basis (31), einen Führungsstab (35) mit einer Rückstellfeder (37) und ein Schutzgehäuse (39) aufweist.

7. Verbesserte Tischanordnung nach Anspruch 6, **dadurch gekennzeichnet, daß** die Rückstellfeder (37) eine Spiralfeder ist.

8. Verbesserte Tischanordnung nach Anspruch 6, **dadurch gekennzeichnet, daß** das Schutzgehäuse (39) eine Metallplatte ist.

9. Verbesserte Tischanordnung nach Anspruch 5, **dadurch gekennzeichnet, daß** der männliche Teil (23) jeder Befestigungsvorrichtung (21) ferner eine Basis (41), die eingerichtet ist, um an dem Flachstab befestigt zu werden, und eine von der Basis vorspringende Nase oder Falle aufweist.

10. Verbesserte Tischanordnung nach den vorstehenden Ansprüchen, **dadurch gekennzeichnet, daß**, wenn der männliche Teil (23) an das drehbare Hebelelement (33) anstößt, letzteres gezwungen wird, sich zu drehen, was die Annäherung der benachbarten Enden der drei Blattabschnitte, die die Schneidblattanordnung (7) bilden, und deren anschließenden Eingriff erlaubt, wenn die Greiferspitze (49) in die entsprechende Aussparung (51) in dem männlichen Teil (23) greift.

11. Verbesserte Tischanordnung nach den vorstehenden Ansprüchen, **dadurch gekennzeichnet, daß** die genaue Ausrichtung der zwei Teile (23,25) durch den Zentrierstift (43) an dem männlichen Teil (23), der in eine an dem weiblichen Teil bereitgestellte entsprechende Aussparung (47) einrückt, sichergestellt ist.

12. Verbesserte Tischanordnung nach den vorstehenden Ansprüchen, **dadurch gekennzeichnet, daß** während des Eingriffs der Führungsstab (35) das drehbare Hebelelement (33) in einer von der Rückstellfeder (37) erzwungenen Ruhelage hält, wobei die Rückstellfeder mittels einer Mutter (45) einstellbar ist.

13. Verbesserte Tischanordnung nach den vorstehenden Ansprüchen, **dadurch gekennzeichnet, daß** die Befestigungsvorrichtung (21) gelöst wird, indem an das drehbare Hebelelement (33) eine Kraft senkrecht zur Längsrichtung des Blatts (7) angelegt wird, um so das Hebelelement (33) anzuheben und die Greiferspitze des Hebels (33) aus der Aussparung (51), in welcher sie aufgenommen ist, auszurücken.

14. Verbesserte Tischanordnung nach Anspruch 5, **dadurch gekennzeichnet, daß** sowohl der männliche als auch der weibliche Teil (23,25) mittels Löcher (27), die an einem Stab vorgesehen sind, um daran die einzelnen Schneidelemente (29) anzubringen, an dem jeweiligen Blattabschnitt (7) befestigt sind.

## Revendications

1. Ensemble de tablier de coupe repliable amélioré (1) destiné à être monté sur une machine de moissonneuse-batteuse de céréales, ledit ensemble de tablier de coupe (1) comprenant une vrille (3), un rouleau de saisie (5) qui peut être levé par rapport à ladite vrille (3), et un ensemble de lames de coupe (7) comprenant des sections de lames insérées et mobiles entre des paires de dents (9), dans lequel le mouvement de ladite vrille (3), du rouleau de saisie (5) et de l'ensemble de lames de coupe (7) est transmis d'un côté de la machine seulement ; chacun de ladite vrille (3), du rouleau de saisie (5) et de l'ensemble de lames de coupe (7) est formé par trois sections, à savoir une section centrale et deux sections latérales repliables ; les extrémités adjacentes des trois sections de lames formant ledit ensemble de lames de coupe (7) sont jointes ensemble de manière rigide lorsqu'elles sont alignées au moyen de dispositifs de fixation (21) qui connectent lesdites trois sections de lames en un seul ensemble de lames de coupe rigide (7) ;
**caractérisé en ce que** chacun desdits dispositifs de fixation (21) comprend un élément de levier susceptible de pivoter (33), ledit élément de levier (33) pouvant prendre une première position de mise en prise pour joindre ensemble de manière rigide une section latérale correspondante avec ladite section centrale, et une seconde position de désengagement, pour permettre à la section latérale correspondante d'être repliée.

2. Ensemble de tablier de coupe amélioré selon la revendication 1, **caractérisé en ce que** ledit élément de levier susceptible de pivoter (33) se termine à une extrémité par un bec (49).

3. Ensemble de tablier de coupe amélioré selon la revendication 2, **caractérisé en ce que** ledit bec (49) convient à une mise en prise dans un retrait correspondant (51).

4. Ensemble de tablier de coupe amélioré selon l'une quelconque des revendications 1, 2 ou 3, **caractérisé en ce que** chacun desdits dispositifs de fixation (21) comprend de plus une broche de centrage (43) pour assurer l'alignement correct de ladite section latérale correspondante avec ladite section centrale.

5. Ensemble de tablier de coupe amélioré selon l'une quelconque des revendications précédentes, **caractérisé en ce que** chacun desdits dispositifs de fixation (21) est formé par deux parties séparées : une partie femelle (25) et une partie mâle (23), chacune d'elles s'adaptant à une extrémité des sections de lames à joindre ensemble de manière rigide, ladite partie femelle (25) comprenant ledit élément de levier susceptible de pivoter (33) et ladite partie mâle (23) comprenant la broche de centrage (43).

6. Ensemble de tablier de coupe amélioré selon la revendication 5, **caractérisé en ce que** ladite partie femelle (25) de chaque dispositif de fixation (21) comprend en outre une base (31), une tige de guidage (35) avec un ressort de rappel (37) et un boîtier de protection (39).

7. Ensemble de tablier de coupe amélioré selon la revendication 6, **caractérisé en ce que** ledit ressort de rappel (37) est un ressort hélicoïdal.

8. Ensemble de tablier de coupe amélioré selon la revendication 6, **caractérisé en ce que** ledit boîtier de protection (39) est une feuille de métal.

9. Ensemble de tablier de coupe amélioré selon la revendication 5, **caractérisé en ce que** ladite partie mâle (23) de chaque dispositif de fixation (21) comprend en outre une base (41) adaptée pour être fixée à la barre plate et un doigt d'encliquetage ou un cliquet de verrouillage qui fait saillie de ladite base.

10. Ensemble de tablier de coupe amélioré selon l'une quelconque des revendications précédentes, **caractérisé en ce que**, quand ladite partie mâle (23) bute contre ledit élément de levier susceptible de pivoter (33), ce dernier est forcé de tourner en permettant l'approche desdites extrémités adjacentes des trois sections de lames qui forment ledit ensemble de lames de coupe (7), et la mise en prise qui s'ensuit quand ledit bec (49) met en prise ledit retrait correspondant (51) dans ladite partie mâle (23).

11. Ensemble de tablier de coupe amélioré selon l'une quelconque des revendications précédentes, **caractérisé en ce que** l'alignement correct des deux parties (23, 25) est assuré par ladite broche de centrage (43) sur ladite partie mâle (23) qui pénètre dans le retrait correspondant (47) fourni dans la partie femelle (25).

12. Ensemble de tablier de coupe amélioré selon l'une quelconque des revendications précédentes, **caractérisé en ce que**, pendant la mise en prise, ladite tige de guidage (35) maintient ledit élément de levier susceptible de pivoter (33) dans une position de repos, poussé par ledit ressort de rappel (37), ledit le ressort de rappel étant réglable par l'intermédiaire d'un écrou (45).

13. Ensemble de tablier de coupe amélioré selon l'une quelconque des revendications précédentes, **caractérisé en ce que** ledit dispositif de fixation (21) est libéré en appliquant audit élément de levier susceptible de pivoter (33) une force perpendiculaire à la direction longitudinale de la lame (7) afin de lever ledit levier (33) et de désengager ledit bec (49) dudit levier (33) dudit retrait (51) dans lequel il est reçu.

14. Ensemble de tablier de coupe amélioré selon la revendication 5, **caractérisée en ce que** lesdites parties mâle et femelle (23, 25) sont fixées à la section de lame respective (7) par l'intermédiaire de trous (27) fournis sur une barre pour y assembler les éléments de coupe individuels (29).
